# FASCICULE DE BREVET EUROPEEN

(11) **EP 1 234 758 B1**
(45) Date de publication et mention de la délivrance du brevet: **26.10.2005**
(21) Numéro de dépôt: 02290324.9
(22) Date de dépôt: 08.02.2002
(51) Int. Cl.: B62D 47/00, B60R 5/04

(54) **Véhicule automobile de type break transformable en un véhicule à benne ouverte vers le haut**
Personenkraftwagen , umwandelbar von einem Kombi in einem Pickup
Motor vehicle , transformable from a estate car type into a pickup type

(30) Priorité: 26.02.2001 FR 0102592
(43) Date de publication de la demande: 28.08.2002
(73) Titulaire: Peugeot Citroen Automobiles SA, 92200 Neuilly sur Seine (FR)
(72) Inventeur: Levitre, Gilles, 92230 Gennevilliers (FR); Cazes, Christophe, 75009 Paris (FR)
(74) Mandataire: Bouget, Lucien

(56) Documents cités:
- DE-A- 19 616 118
- FR-E- 79 254
- GB-A- 302 873
- US-A- 2 997 336
- US-A- 3 419 304
- US-A- 5 692 792
- US-A- 6 129 411

## Description

La présente invention concerne un véhicule automobile de type break, transformable en un véhicule à benne ouverte vers le haut, appelé pick-up.

Les véhicules automobiles de type break comportent un habitacle ayant une partie avant contenant le poste de conduite du véhicule et au moins un siège avant et une partie arrière contenant au moins une rangée de sièges arrière escamotables de manière à constituer une partie d'un plancher plat s'étendant sur toute la partie arrière de l'habitacle du véhicule dans la position rabattue de ladite rangée de sièges arrière.

L'habitacle comporte, à son extrémité arrière, un ouvrant appelé hayon qui est généralement articulé à sa partie supérieure autour d'un axe transversal de telle manière que ce hayon puisse être déplacé entre une position abaissée de fermeture et une position relevée d'ouverture donnant accès, par l'arrière du véhicule, à la partie arrière de l'habitacle.

Ainsi, après avoir rabattu la rangée de sièges arrière, l'utilisateur dispose d'un volume de transport correspondant à l'ensemble de la partie arrière de l'habitacle accessible par l'ouverture dégagée lors du basculement vers le haut du hayon.

Les véhicules automobiles de type break permettent donc de transporter des charges volumineuses qui sont introduites dans le véhicule par l'ouverture arrière.

Toutefois, l'habitacle de ces véhicules est fermé par un toit, de sorte que l'espace de rangement et de transport à l'intérieur du véhicule est limité vers le haut.

De plus, ce type de véhicules automobiles comporte généralement deux parois délimitant latéralement la partie arrière de l'habitacle et qui comprennent des portes latérales arrière équipées de vitre dans leur partie supérieure et deux parties de carrosserie fixes ou custodes généralement équipées de vitre dans leur partie supérieure.

Les vitres des parties supérieures des parties latérales du véhicule, lorsque celui-ci est utilisé pour le transport d'objets volumineux, risquent d'être cassées, lors du chargement ou pendant le transport d'objets encombrants.

On connaît par ailleurs, des véhicules automobiles à benne ouverte vers le haut appelés pick-up qui comportent, à l'arrière d'une cabine constituée par la partie antérieure de l'habitacle du véhicule renfermant le poste de conduite, la benne ouverte vers le haut de forme générale parallélépipédique.

La benne ouverte de ce type de véhicules comporte un plancher, deux parois latérales dans la direction longitudinale du véhicule et une paroi d'extrémité arrière ouvrante située à l'opposé de la cabine.

De tels véhicules présentent des avantages en ce qui concerne leur capacité de chargement par rapport à un véhicule classique ou même par rapport à un véhicule de type break, puisque le niveau de chargement de la benne est pratiquement illimité du fait de l'absence d'un toit recouvrant la benne.

Toutefois, les véhicules de type pick-up ne peuvent être utilisés qu'à des fins utilitaires et seulement par le conducteur et éventuellement un passager, ce qui limite leur intérêt dans le cas de leur utilisation par des particuliers.

En outre, ces véhicules sont difficilement utilisables sur de long parcours routier ou autoroutier.

On connaît du document DE-A-196 16118, un véhicule automobile de type break transformable en un véhicule à benne ouverte vers le haut et qui comporte un pavillon comprenant une partie fixe et une partie amovible déplaçable entre une position prolongeant la partie fixe et une position dissimulée dans un compartiment ménagé dans le véhicule. Le véhicule comporte aussi un hayon muni d'une vitre escamotable de manière coulissante à l'intérieur d'une partie inférieure dudit hayon. Ce document couvre les particularités du préambule de la revendication 1.

On connaît également du document US-A-3 419 304, un véhicule automobile de type break transformable en un véhicule à benne ouverte vers le haut et qui comporte un pavillon formé par un panneau métallique flexible enroulable à l'avant du véhicule. Ce véhicule est pourvu d'un panneau arrière déplaçable par coulissement de façon à transformer le véhicule en break ou en deux configurations à benne ouverte.

L'invention a pour but de proposer un véhicule automobile utilisable aussi bien pour le transport de charges que pour le transport de passagers et qui est facilement transformable par des moyens simples et économiques afin de cumuler les avantages des véhicules automobiles de type break et de type pick-up.

L'invention a donc pour objet un véhicule automobile de type break transformable en un véhicule à benne ouverte vers le haut, appelé pick-up, et comportant un habitacle contenant un poste de conduite, au moins un siège avant, une rangée de sièges arrière comprenant au moins une assise et au moins un dossier et délimité par un plancher, deux parois latérales, un pavillon couvrant l'ensemble de l'habitacle et, à sa partie postérieure, par un hayon pivotant comportant une partie supérieure formant une vitre arrière escamotable de manière coulissante à l'intérieur d'une partie inférieure dudit hayon, caractérisé en ce que :
- le pavillon comporte successivement dans une direction longitudinale du véhicule et de l'avant vers l'arrière, une partie fixe et une partie amovible déplaçable entre une position prolongeant la partie fixe et une position dissimulée dans un compartiment de rangement ménagé dans l'habitacle, et
- une vitre de séparation est amovible entre une position prolongeant le dossier de la rangée de sièges arrière pour séparer l'habitacle en deux parties et une position dissimulée dans un compartiment de rangement ménagé dans l'habitacle.

Selon d'autres modes particuliers de réalisation de l'invention :
- le compartiment de rangement de la partie amovible du pavillon est ménagé dans le plancher du véhicule derrière la rangée de sièges arrière et comporte un couvercle de fermeture,
- le compartiment de rangement est formé par un tiroir disposé dans un logement ménagé dans le plancher et ouvert sur la face arrière du véhicule, ledit tiroir étant déplaçable par translation dans l'axe longitudinal du véhicule entre une position escamotée dans ce logement et une position extraite dudit logement vers l'arrière du véhicule,
- le tiroir comporte, en outre, une paroi d'extrémité située à l'arrière du véhicule et formant, au-dessous du hayon, un bandeau sur la face arrière dudit véhicule,
- le compartiment de rangement de chaque vitre de custode est formé par le compartiment ménagé dans le plancher de l'habitacle,
- le compartiment de rangement de la vitre de séparation est ménagé dans le dossier de la rangée de sièges arrière et comporte un couvercle de fermeture disposé sur la face arrière dudit dossier,
- le bord antérieur de la partie amovible du pavillon comporte au moins un organe de positionnement sur le bord postérieur de la partie fixe dudit pavillon,
- les bords latéraux de la partie amovible comportent chacun au moins une patte d'accrochage avec un organe de verrouillage de ladite partie amovible dans la configuration break du véhicule,
- le bord inférieur de la vitre de séparation comporte au moins un organe de positionnement sur le bord supérieur du dossier de la rangée de sièges arrière,
- la vitre de séparation comporte au moins un élément de verrouillage dans la position de séparation de l'habitacle.

D'autres caractéristiques et avantages de l'invention apparaîtront au cours de la description qui va suivre, donnée à titre d'exemple et faite en se référant aux dessins annexés, sur lesquels :
- la Fig. 1 est une vue en perspective, de trois quarts arrière, d'un véhicule automobile dans sa première configuration ou configuration break,
- la Fig. 2 est une vue en perspective, de trois quarts arrière, du véhicule automobile et montrant les compartiments de rangement ménagés à l'arrière de l'habitacle de ce véhicule,
- la Fig. 3 est une vue en perspective, de trois quarts arrière, du véhicule automobile dans sa seconde configuration à benne ouverte vers le haut ou configuration pick-up,
- les Figs. 4 à 7 sont des vues schématiques en coupe longitudinale montrant différentes configurations de l'habitacle du véhicule automobile, conforme à l'invention,
- la Fig. 8 est une vue de détail en coupe transversale d'une partie mobile du pavillon du véhicule automobile,
- la Fig. 9 est une vue de détail en coupe longitudinale du bord antérieur de la partie amovible du pavillon du véhicule automobile,
- la Fig. 10 est une vue de détail en coupe longitudinale du bord inférieur d'une vitre de séparation de l'habitacle du véhicule automobile.
- les Figs. 11 et 12 sont deux vues en perspective, de trois quarts arrière, d'une variante du véhicule automobile.

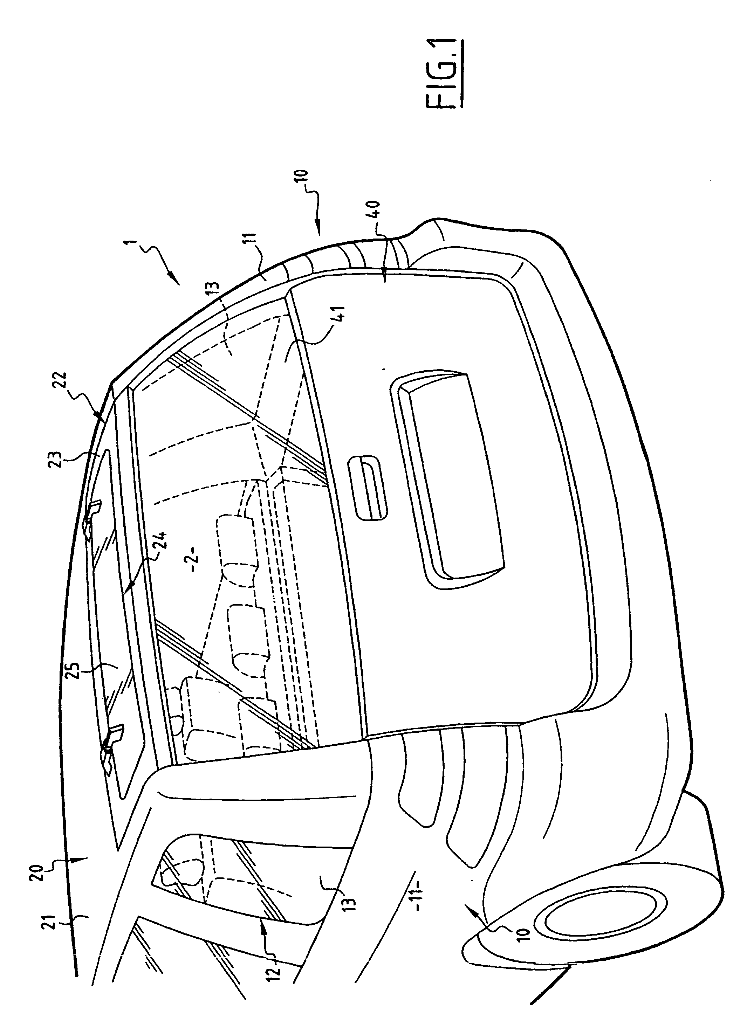

Sur les Figs. 1 à 3, on a représenté un véhicule automobile suivant l'invention de type break désigné de manière générale par la référence 1.

Le véhicule automobile 1 comporte une carrosserie délimitant un habitacle 2 contenant un poste de conduite, au moins un siège avant 3 et une rangée de sièges arrière 4 comprenant au moins une assise 4a et au moins un dossier 4b.

L'habitacle 2 est délimité par un plancher 5, deux parois latérales 10, un pavillon 20 couvrant l'ensemble de l'habitacle 2 et, à sa partie postérieure par un hayon 40 pivotant.

Chaque paroi latérale 10 est formée, à l'arrière du véhicule automobile 1, par une custode 11 comportant, dans sa partie supérieure, une ouverture 12 munie d'une vitre de custode 13 fixe ou amovible, comme on le verra ultérieurement.

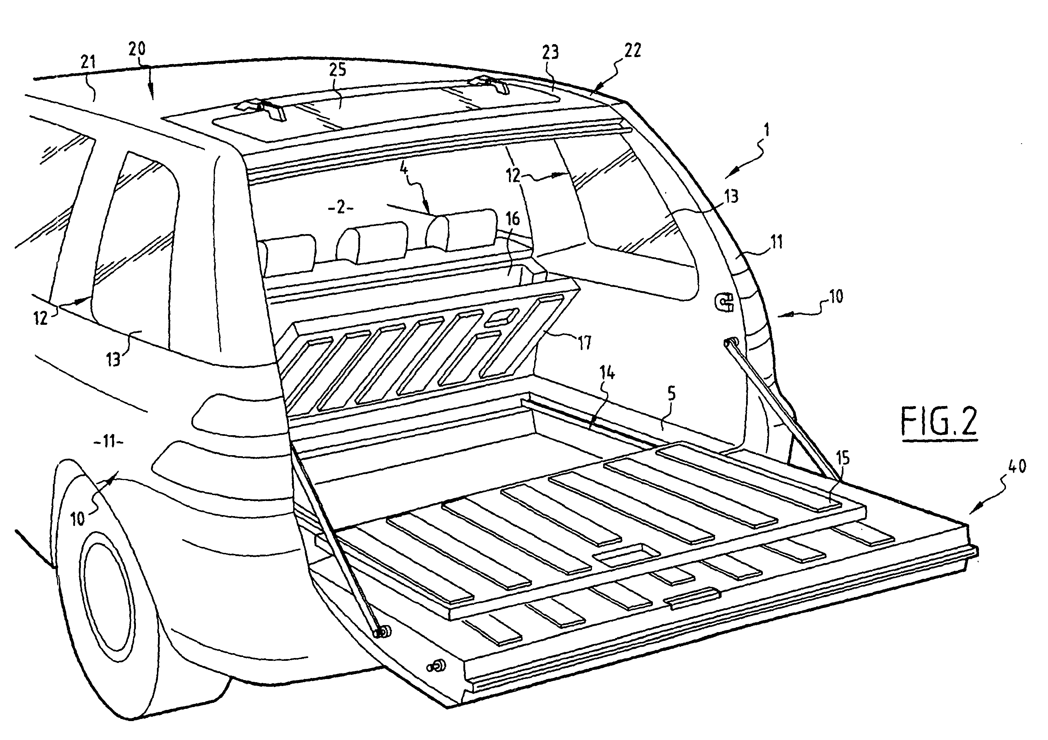

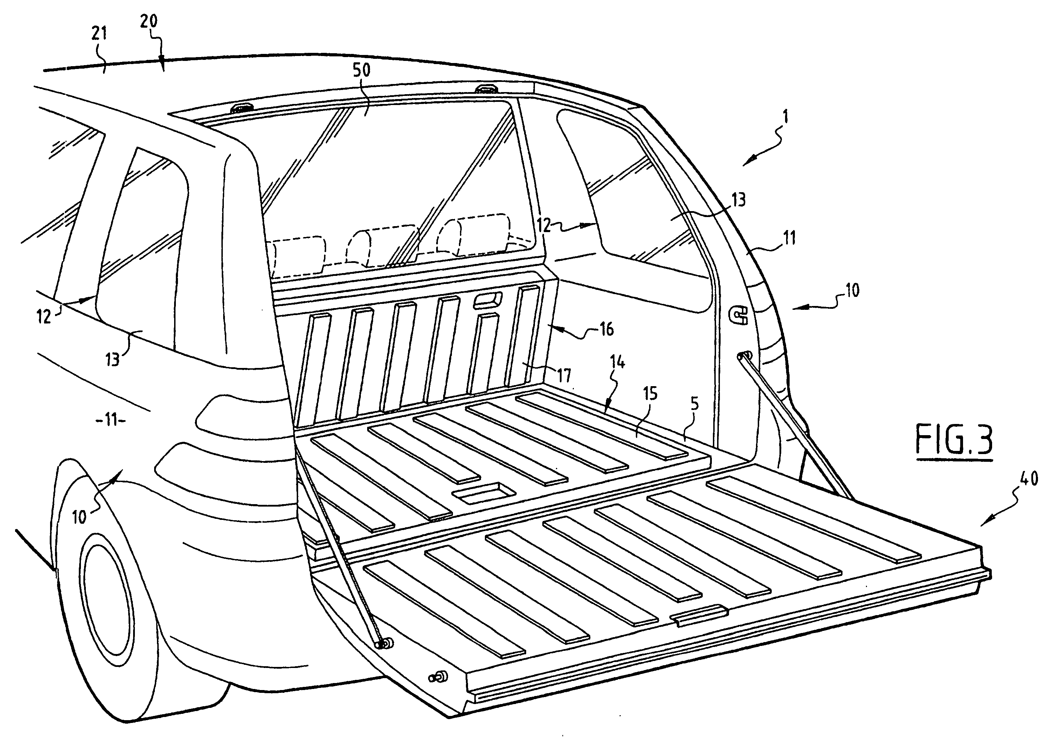

Ainsi que représenté sur les Figs 2 et 3, le plancher 5 comporte, derrière la rangée de sièges arrière 4, un compartiment de rangement 14 muni d'un couvercle de fermeture 15.

Dans cet exemple de réalisation, le couvercle 15 est déplaçable par coulissement entre une position ouverte (Fig. 2) permettant d'accéder au compartiment 14 et une position fermée (Fig. 3) obturant ledit compartiment 14.

Selon une variante, le couvercle 15 peut être monté pivotant sur le bord transversal antérieur de ce compartiment de rangement 14.

De même, la face arrière du dossier 4b de la rangée de sièges arrière 4 est pourvue d'un compartiment de rangement 16 muni d'un couvercle de fermeture 17. Ainsi, le couvercle 17 est déplaçable entre une position ouverte (Fig. 2) de façon à pouvoir accéder au compartiment 16 et une position fermée (Fig. 3) obturant ledit compartiment 16.

Le pavillon 20 comporte successivement dans une direction longitudinale du véhicule automobile 1 et de l'avant vers l'arrière, une partie fixe 21 et une partie amovible 22.

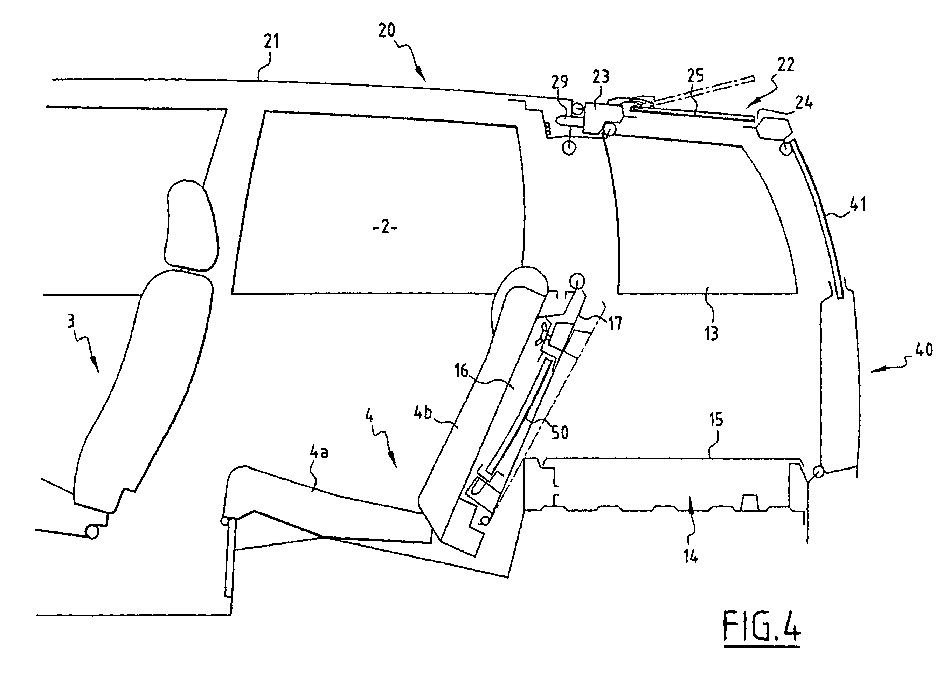

Dans l'exemple de réalisation représenté sur les figures, la partie amovible 22 est formée par un cadre 23 comportant une ouverture 24 munie d'une vitre 25 déplaçable, dans la configuration break du véhicule automobile, entre une position fermée représentée en trait plein à la Fig. 4 et une position ouverte représentée en pointillés sur cette Fig. 4, permettant ainsi de pouvoir transporter des objets de grande longueur et s'étendant à travers l'ouverture 24 dans la configuration de type break du véhicule automobile 1.

Le hayon 40 disposé à l'arrière du véhicule automobile 1 de façon à constituer une cinquième porte, est monté pivotant, à sa partie inférieure, sur la carrosserie autour d'un axe d'articulation horizontal, non représenté, s'étendant transversalement par rapport à la direction longitudinale de ce véhicule.

Ainsi, ce hayon 40 est déplaçable par pivotement entre une position sensiblement verticale assurant l'obturation de la partie arrière du véhicule automobile et une position sensiblement horizontale dans le prolongement du plancher 5 de façon à augmenter la surface de chargement de ce plancher 5.

De plus, le hayon 40, comporte, dans sa partie supérieure, une vitre 41 constituant la lunette arrière du véhicule dans la configuration de type break. Cette vitre 41 est escamotable de manière coulissante à l'intérieur de la partie inférieure du hayon 40.

Selon une variante, le hayon 40 peut être monté articulé sur l'une des parois latérales 10.

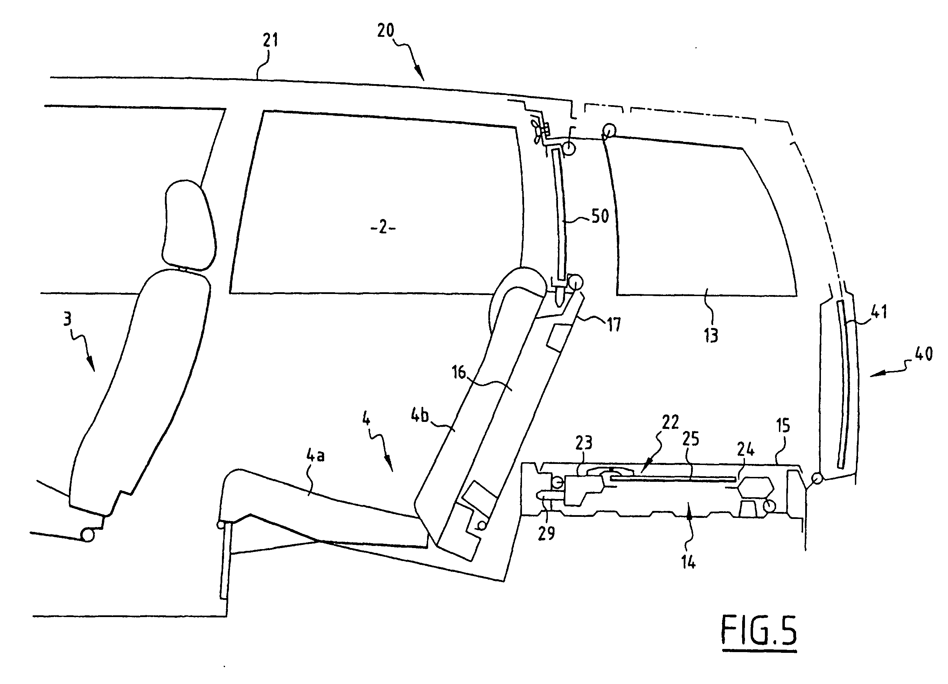

La partie 22 du pavillon 20 du véhicule automobile 1 est amovible de façon à pouvoir être placée dans une première position prolongeant la partie fixe 21 dudit pavillon 20 de façon à couvrir l'arrière de l'habitacle 2, comme représenté sur les Figs. 1 et 4, et une seconde position dissimulée dans le compartiment de rangement 14 ménagé dans le plancher 5 de façon à découvrir l'arrière de l'habitacle 2, comme représenté sur les Figs. 3 et 5.

Après avoir placé la partie amovible 22 dans le compartiment de rangement 14, le couvercle 15 est ramené dans sa position de fermeture de ce compartiment 14 de façon à former une surface continue du plancher 5.

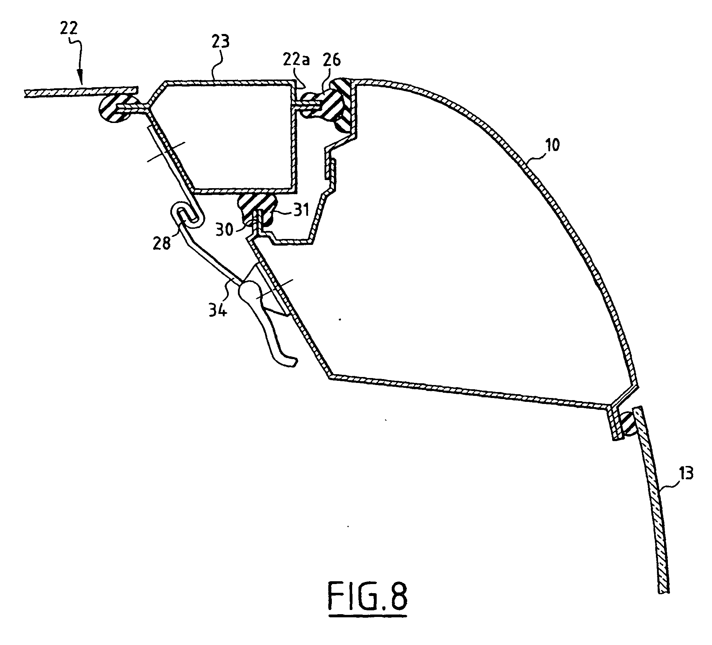

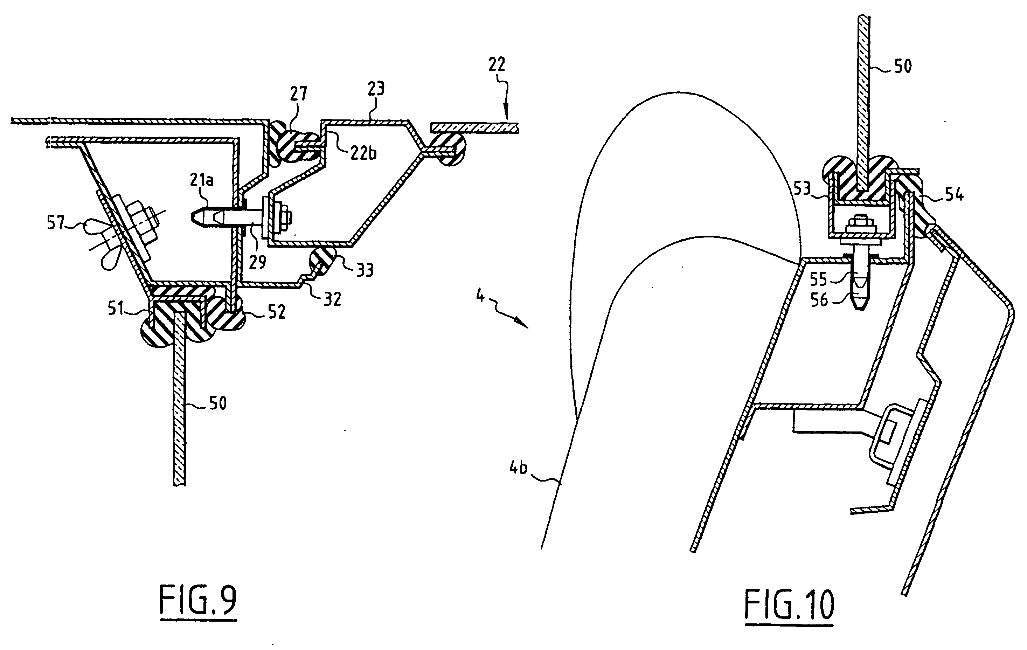

Dans la position de couverture de la partie arrière de l'habitacle 2 représentée sur la Fig. 8, les bords latéraux 22a de la partie amovible 22 sont en appui sur un rebord 30 prévu à la partie supérieure des parois latérales 10 par l'intermédiaire d'un joint d'étanchéité 31 fixé sur le rebord 30 correspondant. De plus, les bords latéraux 22a comportent chacun un joint d'étanchéité 26 en appui contre la paroi latérale 10 correspondante dans la position de couverture de l'arrière de l'habitacle 2. De même, le bord antérieur 22b de la partie amovible 22 (Fig. 9) est en appui sur un rebord 32 prévu sur le bord postérieur de la partie fixe 21 du pavillon 20 par l'intermédiaire d'un joint d'étanchéité 33 fixé sur ce rebord 32.

De plus, le bord antérieur 22b est équipé d'un joint d'étanchéité 27 en appui contre le bord postérieur de la partie fixe 21 lorsque ladite partie amovible 22 est en position de couverture de l'arrière de l'habitacle 2.

Comme représenté à la Fig. 8, les bords latéraux 22a de la partie amovible 22 comportent chacun au moins une patte d'accrochage 28 avec un organe de verrouillage 34 monté sur la paroi latérale 10 correspondante de façon à maintenir ladite partie amovible 22 dans la position de couverture de l'arrière de l'habitacle 2, c'est à dire dans la configuration break du véhicule automobile 1.

La partie amovible 22 du pavillon 20 comporte, sur son bord antérieur 22b, au moins un organe de positionnement sur le bord postérieur de la partie fixe 21 du pavillon 20 et qui est, dans l'exemple de réalisation représenté sur les figures, constitué par au moins un téton 29 destiné à coopérer avec un orifice 21a prévu sur ledit bord postérieur de la partie fixe 21.

Dans la configuration break du véhicule automobile 1, représentée à la Fig. 4, la partie amovible 22 du pavillon 20 est en position de couverture de l'arrière de l'habitacle 2 dans laquelle le téton 29 est placé dans l'orifice 21a et les organes de verrouillage 34 sont accrochés sur les pattes 28 de façon à appliquer les bords 22a et 22b de ladite partie amovible 22 sur les joints d'étanchéité 26, 31 et 27, 33 assurant de ce fait l'étanchéité de l'habitacle 2.

Dans cette configuration, la vitre coulissante 41 du hayon 40 est en position déployée de façon à constituer la lunette arrière du véhicule automobile 1;

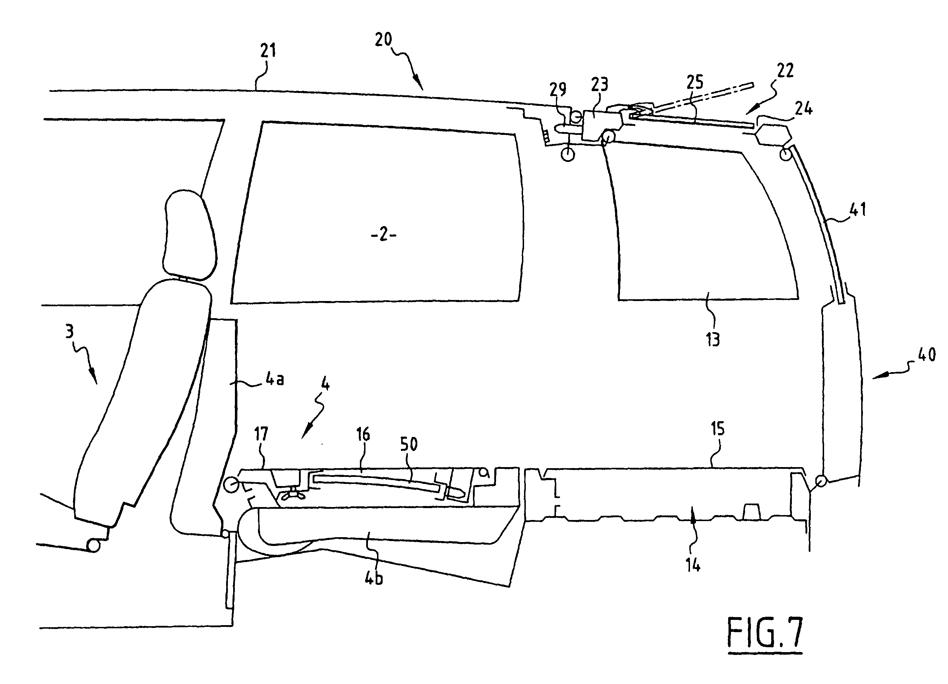

Dans cette configuration, l'assise 4a et le dossier 4a de la rangée de sièges arrière 4 peuvent être déplacés entre une position d'utilisation représentée à la Fig. 4 et une position escamotée représentée à la Fig. 7 dans laquelle ladite assise 4a est basculée sensiblement verticalement derrière le siège avant 3 et le dossier 4b est basculé vers l'avant du véhicule dans le prolongement du plancher 5 ce qui permet d'augmenter la surface de chargement de ce plancher 5.

Pour transformer le véhicule automobile 1 de sa configuration break dans sa configuration pick-up, l'utilisateur escamote la vitre 41 dans la partie inférieure du hayon 40 et déverrouille les organes de verrouillage 34 de façon à désolidariser la partie amovible 22 de la partie fixe 21 du pavillon 20.

Ensuite, l'utilisation ouvre le compartiment de rangement 14 en faisant coulisser le couvercle 15 et place la partie amovible 22 dans ce compartiment 14, puis referme ledit compartiment 14 en faisant coulisser en sens inverse le couvercle de fermeture 15.

Pour isoler les passagers de l'arrière de l'habitacle ouvert dans la configuration pick-up du véhicule automobile 1, ce véhicule automobile 1 dispose d'une vitre de séparation 50 amovible entre une position dissimulée dans le compartiment 16 ménagé sur la face arrière de la rangée de sièges arrière 4, comme représenté sur les Figs. 2 et 4, et une position de séparation, comme représentée sur les Figs. 3 et 5, dans laquelle cette vitre de séparation 50 prolonge le dossier 4b de la rangée de sièges arrière 4.

Dans la position de séparation de l'habitacle 2, le bord supérieur 51 de la vitre 50 coopère avec un joint d'étanchéité 52 disposé sur le bord postérieur de la partie fixe 21 du pavillon 20 (Fig. 9) et le bord inférieur 53 de cette vitre 50 coopère avec un joint d'étanchéité 54 porté par le dossier 4b de la rangée de sièges arrière 4 (Fig. 10). De même, les bords latéraux de cette vitre 50 coopèrent avec des joints d'étanchéité, non représentés, fixés sur la face interne de chaque paroi latérale 10.

De plus, le bord inférieur 53 de la vitre 50 comporte au moins un organe de positionnement sur le bord supérieur du dossier 4b et qui est, dans l'exemple de réalisation représenté à la Fig. 10, constitué par un téton 55 destiné à être placé dans un orifice 56 ménagé sur ledit bord supérieur du dossier 4b, dans la configuration de séparation de l'habitacle 2 en deux parties par la vitre 50, c'est à dire dans la configuration pick-up du véhicule automobile 1.

Enfin, le bord supérieur 51 de la vitre 50 est muni d'au moins un élément de verrouillage 57 dans la position de séparation de l'habitacle 2 par la vitre 50.

Ainsi, l'utilisateur après avoir placé la partie amovible 22 du pavillon 20 dans le compartiment 14 pour transformer le véhicule en configuration pick-up, cet utilisateur ouvre le compartiment 16 en faisant basculer le couvercle 17 et extrait la vitre de séparation 50 de ce compartiment 16. Ensuite, il place le téton 55 dans l'orifice 56 et bloque cette vitre de séparation 50 par l'intermédiaire de l'élément de verrouillage 57.

Dans cette position, l'étanchéité de l'habitacle avec l'extérieur est assurée notamment par les joints 52 et 54.

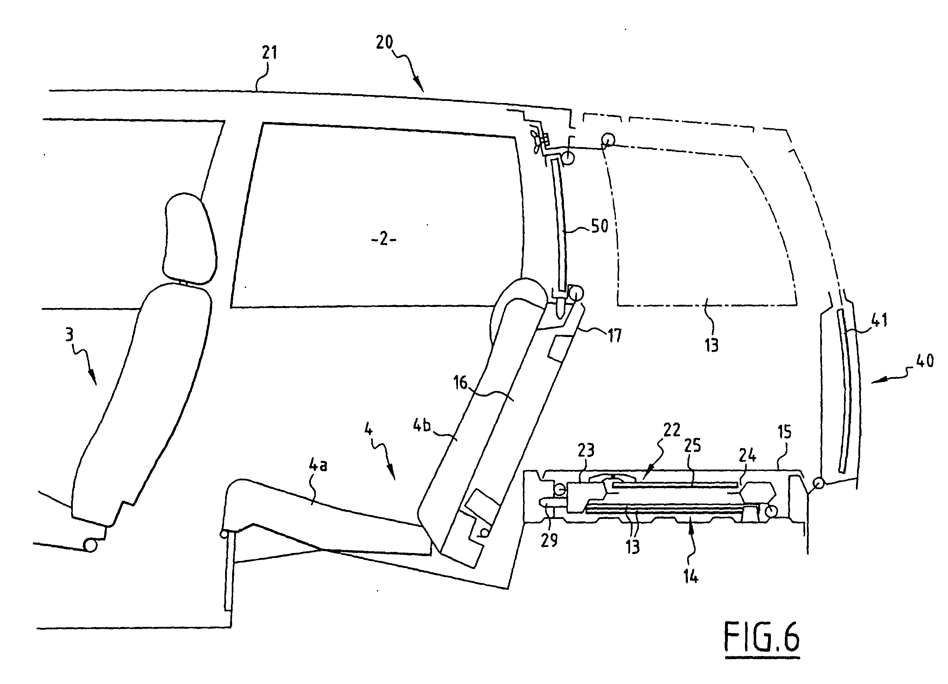

Selon une variante représentée à la Fig. 6, les vitres de custode 13 sont amovibles ce qui évite tout risque de les casser lors du chargement ou pendant le transport d'objets encombrants lorsque le véhicule automobile 1 est utilisé dans sa configuration pick-up.

A cet effet, les vitres de custode 13 peuvent être placées dans le fond du compartiment de rangement 14, comme cela apparaît sur la Fig. 6.

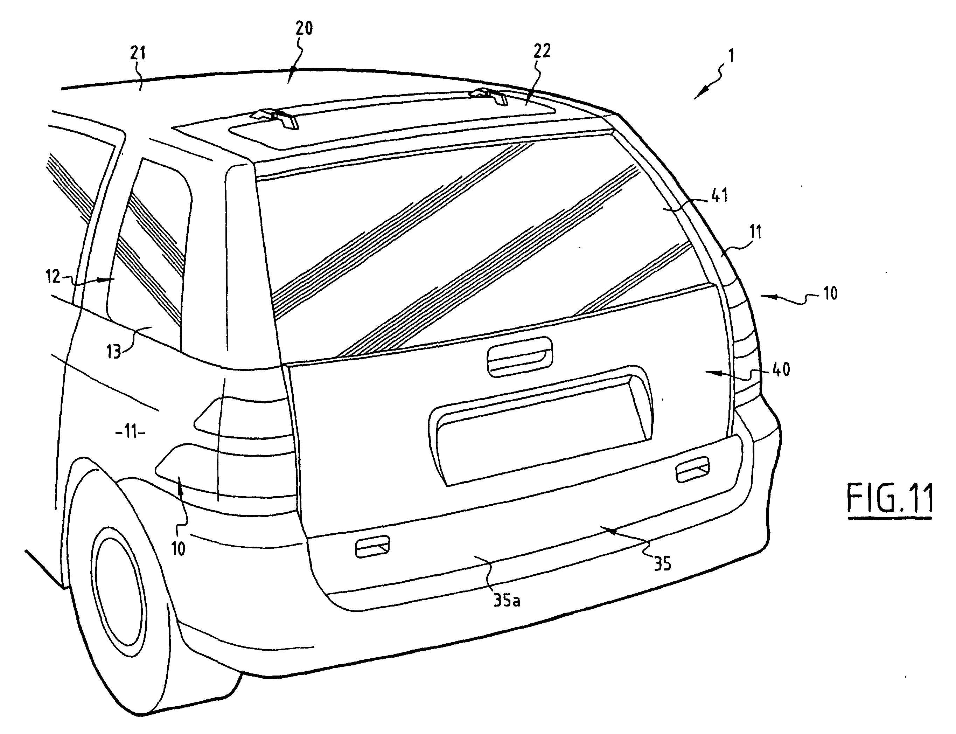

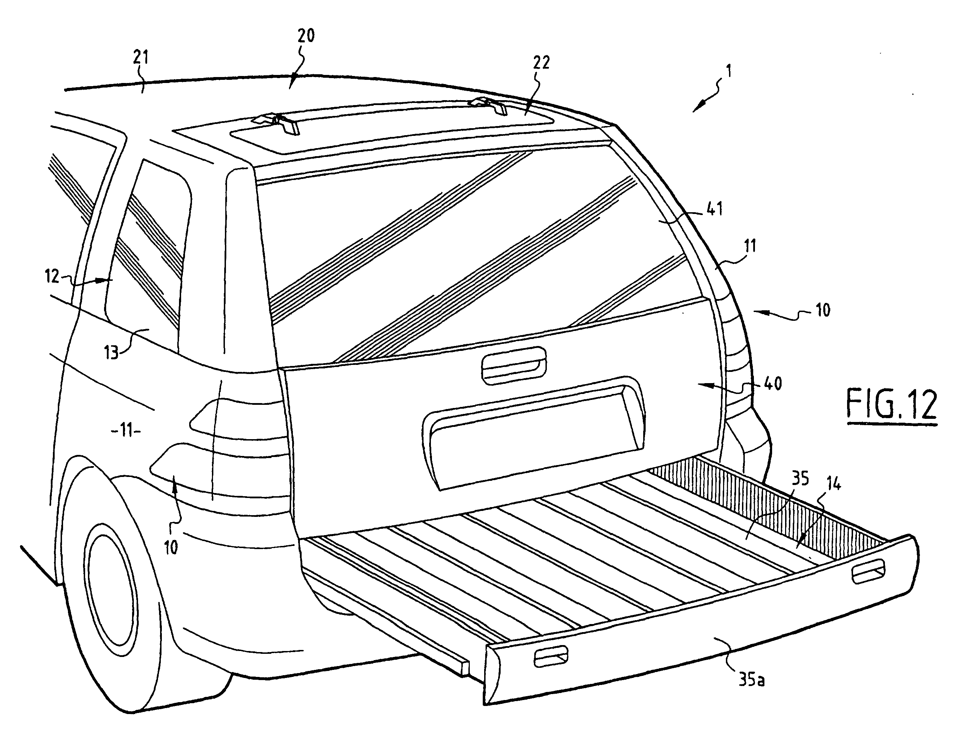

Selon une variante représentée sur les Figs. 11 et 12, le compartiment de rangement 14 est formé par un tiroir 35 disposé dans un logement 18 ménagé dans le plancher 5 et ouvert sur la face arrière du véhicule. Ce tiroir 35 est déplaçable par translation dans l'axe longitudinal du véhicule par exemple au moyen d'un mécanisme de coulissement, non représenté, entre une position escamotée dans le logement 18, comme représentée à la Fig. 11, et une position extraite dudit logement 18 vers l'arrière dudit véhicule, comme représentée à la Fig. 12.

Le tiroir 35 comporte, en outre, une paroi d'extrémité 35a située à l'arrière du véhicule et formant, au-dessous du hayon 40 un bandeau sur la face arrière dudit véhicule automobile.

Pour placer notamment la partie amovible 22 du pavillon 20 et les vitres de custode 13, il suffit à l'utilisateur de tirer le tiroir 35 vers l'extérieur du véhicule et de placer ces éléments dans ledit tiroir 35.

Grâce aux compartiments de rangement 14 et 16, les éléments amovibles de la carrosserie du véhicule automobile peuvent être facilement dissimulés, sans diminuer l'espace de chargement situé derrière la rangée de sièges arrière.

Le véhicule automobile selon l'invention permet de passer facilement d'une configuration break à une configuration pick-up de telle sorte que ce véhicule puisse servir aussi bien pour le transport de passagers ou de charges dans un habitacle entièrement fermé, que pour le transport de charges dans une benne ouverte vers le haut et facilement accessible par l'arrière.

Le véhicule automobile selon l'invention est particulièrement économique du fait de sa polyvalence et peut éviter l'achat d'un second véhicule, pour un utilisateur désirant effectuer des transports sur route à grande distance, de charges ou de passagers dans de bonne condition de confort et de protection climatique, et des transports purement utilitaires de charges volumineuses, dans une utilisation locale.

## Revendications

1. Véhicule automobile de type break transformable en un véhicule à benne ouverte vers le haut, appelé pick-up, et comportant un habitacle (2) contenant un poste de conduite, au moins un siège avant (3), une rangée de sièges arrière (4) comprenant au moins une assise (4a) et au moins un dossier (4b) et délimité par un plancher (5), deux parois latérales (10), un pavillon (20) couvrant l'ensemble de l'habitacle (2) et, à sa partie postérieure, par un hayon pivotant comportant une partie supérieure formant une vitre arrière (41) escamotable de manière coulissante à l'intérieur d'une partie inférieure dudit hayon (40), **caractérisé en ce que** :
- le pavillon (20) comporte successivement dans une direction longitudinale du véhicule et de l'avant vers l'arrière, une partie fixe (21) et une partie amovible (22) déplaçable entre une position prolongeant la partie fixe (21) et une position dissimulée dans un compartiment de rangement (14) ménagé dans l'habitacle (2), et
- une vitre de séparation (50) est amovible entre une position prolongeant le dossier (4b) de la rangée de sièges arrière (4) pour séparer l'habitacle en deux parties et une position dissimulée dans un compartiment de rangement (16) ménagé dans l'habitacle (2).

2. Véhicule automobile selon la revendication 1, **caractérisé en ce que** les parois latérales (10) comportent chacune, à l'arrière de l'habitacle (2), une ouverture (12) munie d'une vitre de custode (13) amovible entre une position fermée dans la configuration break du véhicule et une position ouverte dans la configuration pick-up dudit véhicule et dans laquelle ladite vitre de custode (13) est dissimulée dans un compartiment de rangement (14) ménagé dans l'habitacle (2).

3. Véhicule automobile selon la revendication 1, **caractérisé en ce que** le compartiment de rangement (14) de la partie amovible (22) du pavillon (20) est ménagé dans le plancher (5) de l'habitacle (2) derrière la rangée de sièges arrières (4) et comporte un couvercle de fermeture (15).

4. Véhicule automobile selon la revendication 3, **caractérisé en ce que** le couvercle (15) du compartiment de rangement (14) est coulissant ou pivotant.

5. Véhicule automobile selon la revendication 1, **caractérisé en ce que** le compartiment de rangement (14) est formé par un tiroir (35) disposé dans un logement (18) ménagé dans le plancher (5) et ouvert sur la face arrière du véhicule, ledit tiroir (35) étant déplaçable par translation dans l'axe longitudinal du véhicule entre une position escamotée dans ce logement (18) et une position extraite dudit logement vers l'arrière du véhicule.

6. Véhicule automobile selon la revendication 5, **caractérisé en ce que** le tiroir (35) comporte, en outre, une paroi d'extrémité (35a) située à l'arrière du véhicule et formant, au-dessous du hayon (40) un bandeau sur la face dudit véhicule.

7. Véhicule automobile selon l'une quelconque des revendications précédentes, **caractérisé en ce que** le compartiment de rangement de chaque vitre de custode (13) est formé par le compartiment (14) ménagé dans le plancher (5) de l'habitacle.

8. Véhicule automobile selon la revendication 1, **caractérisé en ce que** le compartiment de rangement (16) de la vitre de séparation (50) est ménagé dans le dossier (4b) de la rangée de sièges arrière (4) et comporte un couvercle de fermeture (17) disposé sur la face arrière dudit dossier (4b).

9. Véhicule automobile selon la revendication 8, **caractérisé en ce que** le couvercle (17) du compartiment de rangement (16) est monté articulé sur le bord inférieur du dossier (4b).

10. Véhicule automobile selon la revendication 1, **caractérisé en ce que** le bord antérieur (22b) de la partie amovible (22) du pavillon (20) comporte au moins un organe de positionnement (29) sur le bord postérieur de la partie fixe (21) dudit pavillon (20).

11. Véhicule automobile selon la revendication 10, **caractérisé en ce que** les bords latéraux (22a) de la partie amovible (22) comporte chacun au moins une patte d'accrochage (28) avec un organe de verrouillage (34) de ladite partie amovible (22) dans la configuration break du véhicule.

12. Véhicule automobile selon l'une quelconque des revendications 1, 10 ou 11, **caractérisé en ce que** la partie amovible (22) du pavillon (20) est formée par un cadre (23) comportant une ouverture (24) munie d'une vitre (25) déplaçable dans la configuration break du véhicule entre une position ouverte et une position fermée.

13. Véhicule automobile selon la revendication 1, **caractérisé en ce que** le bord inférieur (53) de la vitre de séparation (50) comporte au moins un organe de positionnement (55) sur le bord supérieur du dossier (4b) de la rangée de sièges arrière (4).

14. Véhicule automobile selon la revendication 1 ou 13, **caractérisé en ce que** la vitre de séparation (50) comporte au moins un élément de verrouillage (57) dans ladite position de séparation de l'habitacle (2).

15. Véhicule automobile selon l'une quelconque des revendications précédentes, **caractérisé en ce que** ladite assise (4a) et ledit dossier (4b) de la rangée de sièges arrière (4) sont déplaçables entre une position d'utilisation et une position escamotée dans laquelle ladite assise (4a) est basculée sensiblement verticalement derrière ledit siège avant (3) et ledit dossier (4b) est basculé vers l'avant du véhicule dans le prolongement du plancher (5).

## Patentansprüche

1. Kraftfahrzeug vom Typ einer Kombilimousine, das in ein als "Pickup" bezeichnetes Fahrzeug mit einem nach oben hin offenen Aufbau verwandelt werden kann und ein Karosseriegehäuse (2) aufweist, das einen. Führerstand, mindestens einen Vordersitz (3), eine Reihe von Rüchitzen (4) mit mindestens einem Sitz (4a) und mindestens einer Rückenlehne (4b) aufweist, und durch einen Fußboden (5), zwei Seitenwände (10), ein Karosserieoberteil (20), welches die Gesamtheit des Karosseriegehäuses (2) abdeckt, und in seinem rückwärtigen Teil durch eine verschwenkbare Heckklappe begrenzt ist, die einen oberen Teil aufweist, der eine Heckscheibe (41) bildet, welche gleitverschieblich im Inneren eines unteren Teils der Heckklappe (40) versenkbar ist,
**dadurch gekennzeichnet,**
- **daß** das Karosserieoberteil (20) nacheinander in der Längsrichtung des Fahrzeugs und von vorn nach hinten ein ortsfestes Teil (21) sowie ein abnehmbares Teil (22) aufweist, das zwischen einer Position, welche das ortsfeste Teil (21) verlängert, und einer versteckten Position in einem in dem Karosseriegehäuse (2) vorgesehenen Verstaufach (14) verbringbar ist,
- und **daß** eine Trennglasscheibe (50) zwischen einer Position, in der sie die Rückenlehne (4b) der Reihe von Rücksitzen (4) verlängert, um das Karosseriegehäuse in zwei Teile zu unterteilen, und einer versteckten Position in einem in dem Karosseriegehäuse (2) vorgesehenen Verstaufach (16) umsetzbar ist.

2. Kraftfahrzeug nach Anspruch 1,
**dadurch gekennzeichnet,**
**daß** die Seitenwände (10) im rückwärtigen Teil des Karosseriegehäuses (2) jeweils eine Öffnung (12) aufweisen, die mit einem hinteren Seitenfenster (13) versehen ist, welches zwischen einer geschlossenen Position in der Kombilimousinen-Konfiguration des Fahrzeugs und einer offenen Position in der Pickup-Konfiguration des Fahrzeugs, in der das hintere Seitenfenster (13) in einem im Karosseriegehäuse (2) vorgesehenen Verstaufach (14) versteckt ist, umsetzbar ist.

3. Kraftfahrzeug nach Anspruch 1,
**dadurch gekennzeichnet,**
**daß** das Verstaufach (14) für das abnehmbare Teil (22) des Karosserieoberteils (20) im Fußboden (5) des Karosseriegehäuses (2) hinter der Reihe von Rücksitzen (4) vorgesehen ist und einen Verschlußdeckel (15) aufweist.

4. Kraftfahrzeug nach Anspruch 3,
**dadurch gekennzeichnet,**
**daß** der Deckel (15) des Verstaufaches (14) gleitend verschiebbar oder verschwenkbar ist.

5. Kraftfahrzeug nach Anspruch 1,
**dadurch gekennzeichnet,**
**daß** das Verstaufach (14) durch eine Schublade (35) gebildet ist, welche in einer im Fußboden (5) vorgesehenen und an der Heckseite des Fahrzeugs offenen Aufnahme (18) angeordnet ist, wobei die Schublade (35) durch eine Translationsbewegung in der Längsachse des Fahrzeugs zwischen einer in dieser Aufnahme (18) versenkten Position und einer aus der Aufnahme zum Fahrzeugheck hin ausgezogenen Position verstellbar ist.

6. Kraftfahrzeug nach Anspruch 5,
**dadurch gekennzeichnet,**
**daß** die Schublade (35) ferner eine Abschlußwand (35a) aufweist, die sich an der Heckseite des Fahrzeugs befindet und unter der Heckklappe (40) ein Band an der Oberfläche des Fahrzeugs bildet.

7. Kraftfahrzeug nach einem der vorhergehenden Ansprüche,
**dadurch gekennzeichnet,**
**daß** das Verstaufach für das jeweilige hintere Seitenfenster (13) durch das im Fußboden (5) des Karosseriegehäuses vorgesehene Fach (14) gebildet ist.

8. Kraftfahrzeug nach Anspruch 1,
**dadurch gekennzeichnet,**
**daß** das Verstaufach (16) für die Trennglasscheibe (50) in der Rückenlehne (4b) der Reihe von Rücksitzen (4) vorgesehen ist und einen Verschlußdeckel (17) aufweist, der an der Rückseite der Rückenlehne (4b) angeordnet ist.

9. Kraftfahrzeug nach Anspruch 8,
**dadurch gekennzeichnet,**
**daß** der Deckel (17) des Verstaufaches (16) gelenkig am unteren Rand der Rückenlehne (4b) angebracht ist.

10. Kraftfahrzeug nach Anspruch 1,
**dadurch gekennzeichnet,**
**daß** der vordere Rand (22b) des abnehmbaren Teils (22) des Karosserieoberteils (20) mindestens ein Organ (29) zum Positionieren am rückwärtigen Rand des ortsfesten Teils (21) des Karosserieoberteils (20) aufweist.

11. Kraftfahrzeug nach Anspruch 10,
**dadurch gekennzeichnet,**
**daß** die seitlichen Ränder (22a) des abnehmbaren Teils (22) jeweils mindestens eine Klaue (28) zum Verhaken mit einem Organ (34) zum Verriegeln des abnehmbaren Teils (22) in der Kombilimousinen-Konfiguration des Fahrzeugs aufweisen.

12. Kraftfahrzeug nach einem der Ansprüche 1, 10 oder 11,
**dadurch gekennzeichnet,**
**daß** das abnehmbare Teil (22) des Karosserieoberteils (20) von einem Rahmen (23) gebildet ist, der eine Öffnung (24) aufweist, welche mit einer Glasscheibe (25) versehen ist, die in der Kombilimousinen-Konfiguration des Fahrzeugs zwischen einer offenen Position und einer geschlossenen Position umsetzbar ist.

13. Kraftfahrzeug nach Anspruch 1,
**dadurch gekennzeichnet,**
**daß** der untere Rand (53) der Trennglasscheibe (50) mindestens ein Organ (55) zum Positionieren am oberen Rand der Rückenlehne (4b) der Reihe von Rücksitzen (4) aufweist.

14. Kraftfahrzeug nach Anspruch 1 oder 13,
**dadurch gekennzeichnet,**
**daß** die Trennglasscheibe (50) mindestens ein Element (57) zum Verriegeln in der Position zum Unterteilen des Karosseriegehäuses (2) aufweist.

15. Kraftfahrzeug nach einem der vorhergehenden Ansprüche,
**dadurch gekennzeichnet,**
**daß** der Sitz (4a) und die Rückenlehne (4b) der Reihe von Rücksitzen (4) zwischen einer Gebrauchsposition und einer versenkten Position verstellt werden können, in welcher der Sitz (4a) im wesentlichen vertikal hinter den Vordersitz (3) gekippt ist und die Rückenlehne (4b) in der Verlängerung des Fußbodens (5) zur Frontseite des Fahrzeugs hin gekippt ist.

## Claims

1. Motor vehicle of the estate-car type convertible into a vehicle with an upwardly open body, called a pickup, and having an interior space (2) which contains a driver's cockpit, at least one front seat (3), a rear row of seats (4) comprising at least one squab (4a) and at least one backrest (4b) and is delimited by a floor (5), two side walls (10), a top (20) covering the entire interior space (2) and, at its rear part, by a pivoting tailgate having an upper part forming a rear window pane (41) retractable in a sliding manner inside a lower part of the said tailgate (40), **characterised in that**:
- the top (20) has, successively in a longitudinal direction of the vehicle and from the front towards the rear, a fixed part (21) and a removable part (22) displaceable between a position forming a continuation of the fixed part (21) and a position hidden in a stowage compartment (14) provided in the interior space (2), and
- a separating window pane (50) is movable between a position forming a continuation of the backrest (4b) of the rear row of seats (4) in order to separate the interior space into two parts and a position hidden in a stowage compartment (16) provided in the interior space (2).

2. Motor vehicle according to Claim 1, **characterised in that** the side walls (10) each have, at the rear of the interior space (2), an opening (12) fitted with a rear quarter-light pane (13) movable between a closed position in the estate-car configuration of the vehicle and an open position in the pickup configuration of the said vehicle and in which the said rear quarter-light pane (13) is hidden in a stowage compartment (14) provided in the interior space (2).

3. Motor vehicle according to Claim 1, **characterised in that** the stowage compartment (14) for the removable part (22) of the top (20) is provided in the floor (5) of the interior space (2) behind the row of rear seats (4) and has a closing cover (15).

4. Motor vehicle according to Claim 3, **characterised in that** the cover (15) of the stowage compartment (14) is sliding or pivoting.

5. Motor vehicle according to Claim 1, **characterised in that** the stowage compartment (14) is formed by a drawer (35) arranged in a receptacle (18) provided in the floor (5) and opening onto the rear face of the vehicle, the said drawer (35) being displaceable by translation on the longitudinal axis of the vehicle between a position retracted into this receptacle (18) and a position pulled out of the said receptacle towards the rear of the vehicle.

6. Motor vehicle according to Claim 5, **characterised in that** the drawer (35) further has an end wall (35a) situated at the rear of the vehicle and forming, beneath the tailgate (40), a strip on the face of the said vehicle.

7. Motor vehicle according to any one of the preceding claims, **characterised in that** the stowage compartment for each rear quarter-light pane (13) is formed by the compartment (14) provided in the floor (5) of the interior space.

8. Motor vehicle according to Claim 1, **characterised in that** the stowage compartment (16) for the separating window pane (50) is provided in the backrest (4b) of the rear row of seats (4) and has a closing cover (17) arranged on the rear face of the said backrest (4b).

9. Motor vehicle according to Claim 8, **characterised in that** the cover (17) of the stowage compartment (16) is mounted in articulated fashion on the lower edge of the backrest (4b).

10. Motor vehicle according to Claim 1, **characterised in that** the front edge (22b) of the removable part (22) of the top (20) has at least one member (29) for positioning on the rear edge of the fixed part (21) of the said top (20).

11. Motor vehicle according to Claim 10, **characterised in that** each of the lateral edges (22a) of the removable part (22) has at least one lug (28) for attaching to a member (34) for locking the said removable part (22) in the estate-car configuration of the vehicle.

12. Motor vehicle according to any one of Claims 1, 10 or 11, **characterised in that** the removable part (22) of the top (20) is formed by a frame (23) having an opening (24) fitted with a window pane (25) displaceable in the estate-car configuration of the vehicle between an open position and a closed position.

13. Motor vehicle according to Claim 1, **characterised in that** the lower edge (53) of the separating window pane (50) has at least one member (55) for position on the upper edge of the backrest (4b) of the rear row of seats (4).

14. Motor vehicle according to Claim 1 or 13, **characterised in that** the separating window pane (50) has at least one element (57) for locking in the said position of separation of the interior space (2).

15. Motor vehicle according to any one of the preceding claims, **characterised in that** the said squab (4a) and the said backrest (4b) of the rear row of seats (4) are displaceable between a folded-away position in which the said squab (4a) is swung up substantially vertically behind the said front seat (3) and the said backrest (4b) is swung down towards the front of the vehicle forming a continuation of the floor (5).
